# EUROPÄISCHE PATENTSCHRIFT

(11) **EP 0 426 143 B1**
(45) Veröffentlichungstag und Bekanntmachung des Hinweises auf die Patenterteilung: **06.07.1994**
(21) Anmeldenummer: 90120878.5
(22) Anmeldetag: 31.10.1990
(51) Int. Cl.: B01D 11/02

(54) **Verfahren und Vorrichtung zum Herauslösen von Metallen aus Gesteinen und Ablagerungen**
Process and apparatus for extracting metals from ores and deposits
Procédé et dispositif d'extraction de métaux de pierres et de sédiments

(30) Priorität: 01.11.1989 DE 3936303; 01.03.1990 DE 4006336
(43) Veröffentlichungstag der Anmeldung: 08.05.1991
(73) Patentinhaber: ERWIN MÜLLER GmbH, D-74906 Bad Rappenau (DE)
(72) Erfinder: Müller, Alexander, W-6927 Bad Rappenau-Heinsheim (DE)
(74) Vertreter: Müller, Hans, Dipl.-Ing.

(56) Entgegenhaltungen:
- DE-C- 971 250
- FR-A- 1 347 284
- FR-A- 2 400 934
- US-A- 4 887 799

## Beschreibung

### TECHNISCHES GEBIET

Die Erfindung betrifft ein Verfahren zum Herauslösen von Metallen aus Gesteinen, Schlämmen, Flüssigkeitsablagerungen, Aschen oder dergleichen Materialien. Die Erfindung betrifft auch eine bei diesem Verfahren verwendete Verwirbelungskammer.

Bei diesem Verfahren wird das Metall aus dem Material, in dem es enthalten ist, wie beispielsweise aus Erz und Felsgestein durch chemische Reaktion mit einem Lösungsmittel herausgelöst. Dazu wird das die Metalle enthaltende Material mit diesem Lösungsmittel in Kontakt gebracht.

### STAND DER TECHNIK

Es sind Verfahren der eingangs genannten Art bekannt, bei denen das Metall enthaltende Material in Behälter eingelagert und dann mit dem Lösungsmittel übersprüht wird. Ein derartiges Verfahren hat sich als nicht besonders effektiv herausgestellt, da die Zeit, die zum vollständigen chemischen Reagieren des Materials mit dem Lösungsmittel benötigt wird, relativ lang ist. Um diese Reaktionszeit zu verkürzen ist es bekannt, das Material mittels Transportvorrichtungen durch das Lösungsmittel hindurchzufördern. Umgekehrt ist es ebenfalls bekannt, das Lösungsmittel über das Material hinwegfließen zu lassen. Zur weiteren Verkürzung der zur chemischen Reaktion benötigten Zeitdauer ist es zusätzlich bekannt, das die Metalle enthaltende Material in dem flüssigen Lösungsmittel herumzurühren oder sonstwie in einem entsprechenden Behälter rotieren zu lassen. Alle diese Verfahren und Arbeitsweisen sind jedoch sehr zeit- und kostenaufwendig. Besonders nachteilig ist dabei, daß diese Verfahren hinsichtlich ihrer wirtschaftlichen Ausbeute an Metallen auch nicht sehr effektiv sind.

So ist beispielsweise durch die gattungsbildende FR-A-1.347.284 ein Verfahren der eingangs genannten Art bekannt, bei dem das Metall enthaltende Gemenge in etwa mehlige Konsistenz gebracht, mit Wasser vermischt und anschließend mit Lösungsmittel behandelt wird. Darüber hinaus ist aus der DE-C-971.250 ein Verfahren zur Behandlung von kleinteiligen oder pulverförmigen Stoffen bekannt, das auch zum Herauslösen von Metallen aus, zum Beispiel, Schlämmen geeignet ist. Dabei wird das Metall enthaltende Gemenge vollständig mit dem Gemisch-Strahl benetzt und alles innig miteinander verwirbelt und anschließend durch ein Sieb hindurchgeleitet, das nur Flüssigkeit und darin gelöste Partikel hindurchläßt.

### DARSTELLUNG DER ERFINDUNG

Ausgehend von diesem vorbekannten Stand der Technik liegt der Erfindung die Aufgabe zugrunde, eine Möglichkeit zum Herauslösen von Metallen aus Gesteinen oder sonstigen Materialien anzugeben, die wirtschaftlich einfach und damit kostengünstig und trotzdem sehr effektiv ist.

Diese Erfindung ist bei dem erfindungsgemäßen Verfahren durch die Merkmale des Patentanspruchs 1 gegeben. Die bei diesem Verfahren verwendete erfindungsgemäße Vorrichtung ist durch die Merkmale des Patentanspruchs 9 gegeben.

Das erfindungsgemäße Verfahren zeichnet sich ausgehend von dem aus der FR-A-1.347.284 bekannten Stand der Technik durch folgende zusätzliche Verfahrensschritte aus: Das Metall enthaltende, mit Wasser und gegebenenfalls mit einem Gleitmittel vermischte Gemenge wird unter Druck gegen einen unter Hochdruck austretenden Strahl gerichtet. Dieser Hochdruckstrahl enthält ebenfalls ein Lösungsmittel. Durch das Aufprallen des Gemisch-Strahles auf den das Lösungsmittel enthaltenden Druckstrahl wird erreicht, daß das in der Mischung enthaltende mehlige Gemenge vollständig mit dem Lösungsmittel in Kontakt kommt. Daran anschließend werden alle flüssigen und mehligen Bestandteile innig miteinander verwirbelt und schließlich dann durch ein Sieb hindurchgeleitet, wobei nur die Flüssigkeitsbestandteile mit den in ihr gelösten Metallpartikeln durch das Sieb hindurchgelangen und aufgefangen werden können. Durch eine anschließende beispielsweise Elektrolyse kann dann das in der Flüssigkeit vorhandene Metall gewonnen werden. Es hat sich herausgestellt, daß sich mit einem derartigen Verfahren auf wirtschaftlich sehr einfache Weise Metalle aus Gesteinen, Schlämmen, Flüssigkeitsablagerungen, Aschen oder dergleichen Materialien herauslösen lassen.

Eine spezielle Weiterbildung des erfindungsgemäßen Verfahrens zeichnet sich dadurch aus, daß die verwirbelten Produkte eine Zeitlang vermischt miteinander aufbereitet bleiben. Diese separate Aufbereitung kann beispielsweise dadurch erfolgen, daß die Produkte eine Zeitlang auf mechanische Weise miteinander vermischt werden. Während dieser Verweildauer kann dem Flüssigkeitsgemisch gegebenenfalls Luft und/oder Sauerstoff und/oder Wärme beispielsweise in Form von Wasserdampf und/oder weiteres Lösungsmittel zugegeben werden.

Die bei dem erfindungsgemäßen Verfahren verwendete Vorrichtung zeichnet sich durch eine Verwirbelungskammer mit zumindest einer sackartigen Auswölbung aus. Die Verwirbelungskammer hat zumindest eine Einlaßöffnung für den Zutritt von zumindest einem Zuleitungskanal in diese Kammer hinein. Diese Öffnung liegt der sackartigen Auswölbung in Strömungsrichtung gegenüber. Die Kammer besitzt ferner eine Ausflußöffnung, die etwa in rechtem Winkel zum Zuleitungskanal, am anderen Ende der Kammer, vorhanden ist. Dem Zuleitungskanal ist eine Hochdruckpumpe zugeordnet, mit der das Flüssigkeitsgemisch aus Wasser und Lösungsmittel unter Hochdruck in die Verwirbelungskammer hineingedrückt werden kann.Der Ausfluß erfolgt durch ein Sieb hindurch, das nur Flüssigkeit mit den in ihr gelöst vorhandenen Metallpartikeln hindurchläßt. Ferner mündet zumindest ein weiterer Kanal schräg in den Zuleitungskanal bzw. direkt in die Verwirbelungskammer hinein, dessen Kanalmündung insbesondere düsenartig ausgebildet ist. Dieser Kanal dient zum Einleiten der Mischung aus mehligem Gemenge und zumindest Wasser. Auch diesem Kanal ist eine Hochdruckpumpe zugeordnet, so daß diese Mischung unter Druck gegen den aus dem Zuleitungskanal austretenden Gemisch-Strahl gerichtet werden kann. Durch dieses aus schräger Richtung Aufeinanderprallen der beiden Strahlen wird eine sehr feine Auflösung des mehligen Gemenges und gleichzeitig auch eine praktisch vollständige Benetzung der mehligen Partikel mit dem in dem Gemisch-Strahl vorhandenen Lösungsmittel erreicht. Durch die anschließende Verwirbelung des Gemisch-Strahls mit dem Mischungsstrahl in der Wirbelkammer, wird eine vollständige chemische Reaktion der in den Gesteinen oder dergleichen Materialien enthaltenden Metalle mit der Lösungsflüssigkeit ermöglicht. Durch Zuführen von Lösungsmittel bereits in die Zuführleitung mit der Gemenge-Mischung ergibt sich eine zusätzliche Reaktionszeit für das Lösungsmittel. Aufgrund dieser Vermischungs- und Reaktionstechnik kann die zur Reaktion benötigte Zeitspanne wünschenswert kurz gehalten werden, so daß sofort nach Austritt aus der Verwirbelungskammer in der vorhandenen Flüssigkeit die Metallpartikel in gelöster Form vorhanden sein können.

Nach einer speziellen Weiterbildung zeichnet sich die erfindungsgemäße Vorrichtung durch eine Kammer aus, die mit einer Einlaßöffnung und einer Auslaßöffnung versehen ist. Die Einlaßöffnung ist mit dem Auslaßkanal des die Verwirbelungskammer enthaltenen Gehäuses und die Auslaßöffnung mit dem Absetz- und Aufbereitungsbecken verbunden. In der Kammer ist ferner ein Rührwerk vorhanden, durch das das in der Kammer befindliche Flüssigkeitsgemisch in der Kammer herumbewegt werden kann. Die Größe dieser Kammer richtet sich nach der zu behandelnden Flüssigkeitsmenge und nach der Verweildauer dieser Flüssigkeitsmenge.

Sofern Luft und/oder Sauerstoff und/oder ein weiteres Lösungsmittel diesem Flüssigkeitsgemisch zugegeben werden sollen, kann dies auf einfache Weise dadurch geschehen, daß der oder die entsprechenden weiteren Einlaßkanäle in diese Kammer hinein einmünden. Dabei ist eine besonders innige Mischung mit diesen zusätzlich eingeführten Gas- oder Flüssigkeitsmengen dann gegeben, wenn diese weiteren Produkte durch die Rührschaufeln des Rührwerks in die Kammern eingegeben werden. Beim Bewegen der Schaufeln kann so eine innige Vermischung zwischen den zugegebenen Produkten und dem in der Kammer vorhandenen Flüssigkeitsgemisch herbeigeführt werden.

Weitere vorteilhafte Ausgestaltungen und Weiterbildungen der Erfindung sind den Merkmalen der weiteren Unteransprüche und den nachstehenden Ausführungsbeispielen zu entnehmen.

### KURZE BESCHREIBUNG DER ZEICHNUNG

Die Erfindung wird im folgenden anhand der in der Zeichnung dargestellten Ausführungsbeispiele näher beschrieben und erläutert. Es zeigen:
- Fig. 1: in schematischer, perspektivischer Ansicht eine bei dem erfindungsgemäßen Verfahren verwendete erfindungsgemäße Verwirbelungskammer mit ihren Zu- und Ableitungen,
- Fig. 2: in schematischer, perspektivischer Ansicht eine bei dem erfindungsgemäßen Verfahren verwendete andere erfindungsgemäße Vorrichtung,
- Fig. 3: in schematischer, perspektivischer Ansicht einen Ausschnitt aus einer weiteren erfindungsgemäßen Vorrichtung und
- Fig. 4: in schematischer, perspektivischer Ansicht einen Ausschnitt aus einer nochmals anderen erfindungsgemäßen Vorrichtung.

### WEGE ZUR AUSFÜHRUNG DER ERFINDUNG

In einem Gehäuseblock 10 ist eine Höhlung in Form einer Verwirbelungskammer 12 vorhanden. Diese Verwirbelungskammer besitzt eine sackartige Auswölbung 14, in die von oben ein Kanal 16 einmündet. Die Mündungsöffnung 18 dieses Kanals 16 liegt der sackartigen Auwölbung 14 etwa gegenüber, am - in der Zeichnung oberen - Rand der Verwirbelungskammer 12.

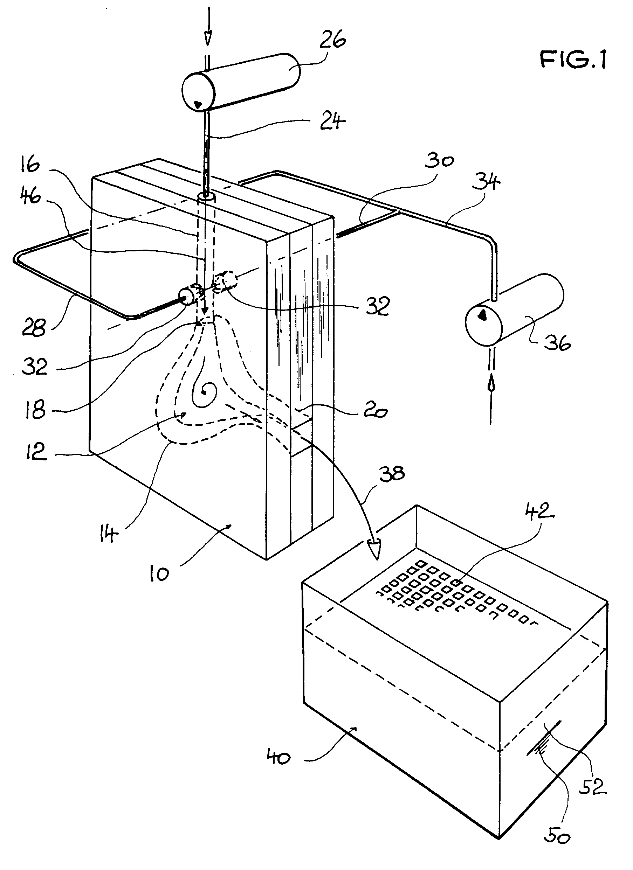

Im - in Fig. 1 rechten - Endbereich mündet die Verwirbelungskammer 12 in einen Auslaßkanal 20 hinein, der aus dem Gehäuseblock 10 herausführt.

Von der Mündungsöffnung 18 führt der Kanal 16 - in der Zeichnung senkrecht nach oben - aus dem Gehäuseblock 10 heraus. Er ist mit einer Zuleitung 24 verbunden, in der eine Hochdruckpumpe 26 vorhanden ist.

Rechtwinklig zur Längserstreckung des Kanals 16 mündet aus entgegengesetzten Seiten jeweils eine Zweigleitung 28, 30 in den Kanal 16 hinein. Beide Zweigleitungen 28, 30 enden im Bereich des Kanals 16 in Gestalt einer Düse 32. Die beiden Zweigleitungen 28, 30 zweigen sich von einer Zuleitung 34 ab, in der ebenfalls eine Hochdruckpumpe 36 vorhanden ist.

Die Verwirbelungskammer 12 ist in ihrem Querschnitt scheibenartig ausgebildet. So ist die sackartige Auswölbung 14 nur parallel zu einer Ebene innerhalb des Gehäuseblockes 10 vorhanden.

Schräg unterhalb des Auslaßkanals 20 ist ein Absetz- bzw. Auffangbecken 40 vorhanden, das mit einem Sieb 42 bedeckt ist. Dieses in der Zeichnung lediglich symbolhaft angedeutete Sieb dient zum Zurückhalten von aus der Verwirbelungskammer 12 austretenden Schlamm- oder sonstigen gröberen Bestandteilen, so daß durch das Sieb 42 nur flüssige Bestandteile nach unten hindurchdringen können.

Die Vorrichtung gemäß Fig. 1 funktioniert auf folgende Weise. Durch die Zuleitung 24 wird von oben in den Kanal 16 ein Gemisch aus Wasser und Lösungsmittel hineingeleitet. Mittels der Hochdruckpumpe 26 tritt dieses Gemisch in den Kanal 16 in Form eines starken Gemisch-Strahls 46 ein. Durch die Zuleitung 34 wird durch die Hochdruckpumpe 36 ebenfalls unter Druck eine Mischung aus Wasser, einem mehligen, metallhaltigen Gemenge und Lösungsmittel durch die Zweigleitungen 28, 30 hindurchgedrückt. Durch die Düsen 32 trifft das Gemisch dann etwa rechtwinklig auf den Gemisch-Strahl 46. Bei diesem Aufeinanderprallen werden die Mischungen sehr fein zerstäubt, so daß die mehligen Bestandteile vollständig auch mit dem in dem Gemisch-Strahl 46 vorhanden Lösungsmittel in chemischen Kontakt geraten können. Die dadurch bewirkte chemische Reaktion wird fortegesetzt und intensiviert dadurch, daß der Gemisch-Strahl 46 unterhalb der Düsen 32 mit der Mischung in der Verwirbelungskammer 12 weiter innig verwirbelt und damit vermischt wird. Im Anschluß daran tritt der Inhalt der Verwirbelungskammer 12 durch den Auslaßkanal 20 aus dem Gehäuseblock 10 wieder heraus und wird über eine nicht dargestellte Rohrleitung (Pfeil 38) zu dem Absetz- und Aufbereitungsbecken 40 geleitet. Durch das in dem Becken 40 vorhandene Sieb 42 werden die Schlamm- und sonstigen größeren bzw. festeren Bestandteile zurückgehalten, so daß in dem Becken 40, unterhalb des Siebes 42, sich nur flüssige Bestandteile 50 ansammeln können. In dieser Flüssigkeit 50 sind die Metallpartikel nunmehr in gelöster Form vorhanden. Etwa durch Elektrolyse können die Metalle dann aus dieser Flüssigkeit abgeschieden werden.

Im Zwischenraum 52 zwischen dem Sieb 42 und der aufgefangenen Flüssigkeit 50, d. h. in Strömungsrichtung hinter dem Sieb 42, ist ein Unterdruck vorhanden, so daß eine gewisse Saugwirkung durch das Sieb hindurch für die Flüssigkeit 50 vorhanden ist.

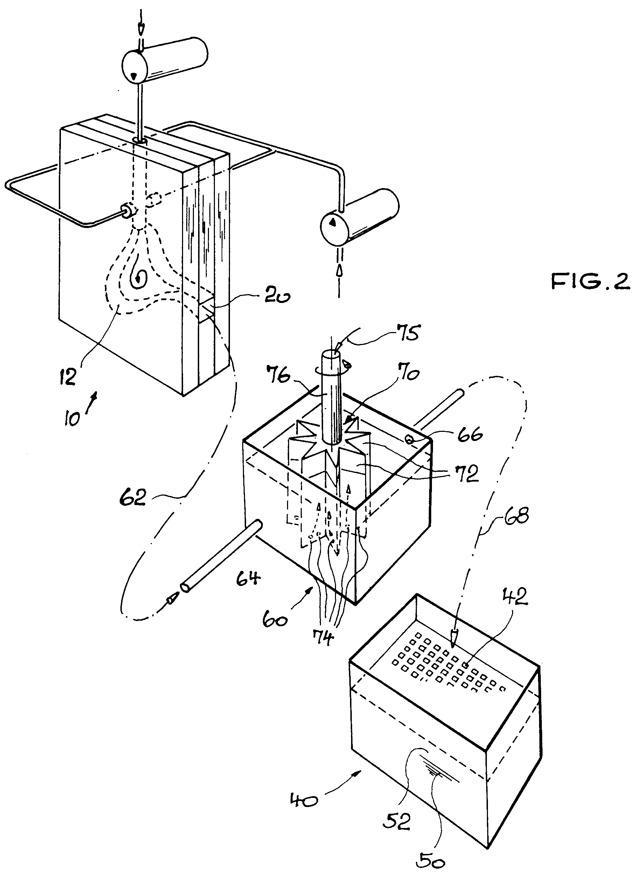

Zwischen dem Gehäuseblock 10 mit der Verwirbelungskammer 12 und dem Absetz- und Aufbereitungsbecken 40 ist bei der Darstellung gemäß Fig. 2 ein weiteres Becken 60 vorhanden. Eine Rohrleitung 62 führt von dem Auslaßkanal 20 des Gehäuseblockes 10 zu einer im Becken 60 vorhandenen Einlaßöffnung 64. Die Einlaßöffnung 64 befindet sich im unteren Seitenbereich dieses Beckens 60.

Im oberen Bereich und der Einlaßöffnung 64 gegenüberliegend, ist eine Auslaßöffnung 66 vorhanden. Diese Auslaßöffnung 66 ist über eine weitere Rohrleitung 68 mit em Absetz- und Aufbereitungsbecken 40 verbunden. Diese Rohrleitung 68 endet in der gleichen Weise wie die durch den Pfeil 38 in Fig. 1 dargestellte Rohrleitung in einem Absetzbecken 40.

In dem diesem Bereich 40 vorgeschalteten Becken 60 is ein Rührwerk 70 angeordnet, das mit mehreren radial angeordneten Rührschaufeln 72 versehen ist. Zuminest im unteren Bereich dieser Rührschaufeln 72 sind Öffnungen 74 vorhanden. Die Drehwelle 76 des Rührwerks 70 ist hohl im Form eines weiteren Einlaßkanals 75 ausgebildet, so daß durch diese Welle 76, die senkrecht von oben in das Becken 60 hineintaucht, ein zusätzliches Medium wie Luft und/oder Sauerstoff und/oder ein weiteres Lösungsmittel eingegeben werden kann. Diese zugegebenen Produkte strömen dann durch die Öffnungen 74 in die Kammer hinein. Beim Drehen der Rührschaufeln 72 vermischen sich diese zusätzlichen Produkte innig mit dem in dem Becken 60 vorhandenen Flüssigkeitsgemisch.

Sofern in dem Becken 60 eine entsprechend große Menge von diesem Flüssigkeitsgemisch vorhanden ist, fließt dieselbe über die Auslaßöffnung 66 zu dem Absetz- und Aufbereitungsbecken 40. Wie oben bereits beschrieben, können etwa durch Elektrolyse die Metalle dann aus der in diesem Becken vorhandenen Flüssigkeit abgeschieden werden.

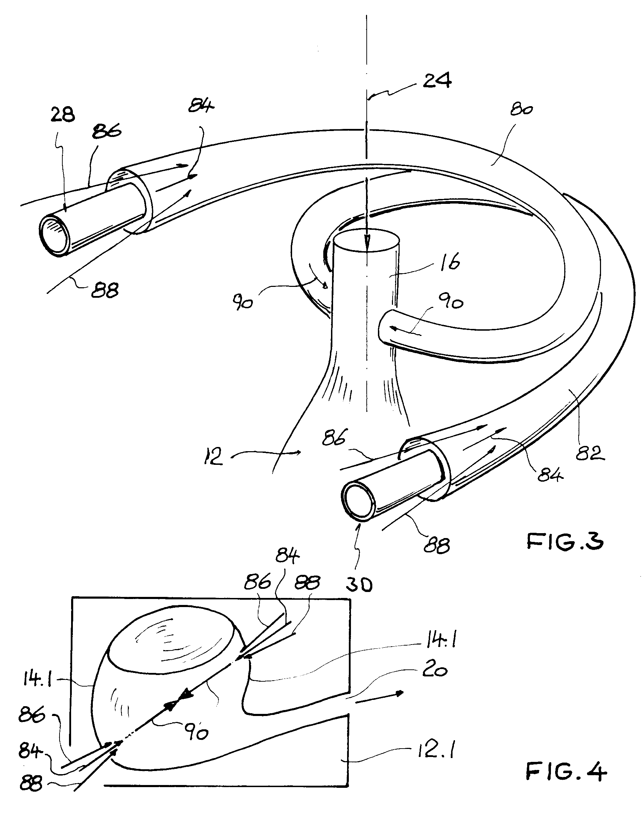

In Fig. 3 ist eine bauliche Variante im Bereich der Zuleitung zwischen den Zweigkanälen 28, 30 und dem in die Verwirbelungskammer 12 hineinführenden Zuleitungskanal 16 dargestellt.

Im Unterschied zu der Darstellung gemäß Fig. 1 führen die beiden Zweigleitungen 28, 30 nicht direkt in en Kanal 16 hinein; die beiden Leitungen 28, 30 münden vielmehr jeweils in ein bogenförmiges Kanalstück 80, 82 ein. Die beiden Kanalstücke 80, 82 münden dann ihrerseits sich gegenüberliegend in den Kanal 16 hinein, so wie es in Fig. 1 für die Leitungen 28, 30 dargestellt ist.

Die bogenförmigen Kanalstücke 80, 82 haben den Zweck, daß sich das in den Leitungen 28, 30 zugeführte mehlige Gemisch mit dem vorhandenen Lösungsmittel noch inniger vermischen kann. Das mehlige Gemisch wird an der Außenwandung der Kanalstücke 80, 82 in seiner Strömungsgeschwindigkeit abgebremst, so daß dadurch eine zusätzliche Vermischung im Querschnittsbereich der beiden Kanalstücke 80, 82 stattfinden kann.

Da sich in der das mehlige Gemisch enthaltenden Leitung 28 bzw. 30 keine sehr hohe Strömungsgeschwindkigkeit für das Gemenge erreichen läßt, ist bei der Darstellung gemäß Fig. 3 vorgesehen, daß nach Austritt dieses Gemenges, was durch einen Pfeil 84 schematisch dargestellt ist, dieser Gemisch-Strahl in seiner Strömungsgeschwindigkeit beschleunigt wird durch seitlich auf ihn eintreffende weitere Flüssigkeitsstrahlen 86, 88. Diese Flüssigkeitsstrahlen 86, 88 enthalten kein Gemenge, sondern lediglich Lösungsmittel vermischt mit Wasser und gegebenenfalls weiteren flüssigen Bestandteilen. Die Flüssigkeitsstrahlen 86, 88 können damit in der Praxis sehr leicht eine um den Faktor 10 bis 20 höhere Strömungsgeschwindigkeit besitzen als der Gemengestrahl in der Leitung 28 bzw. 30. Damit ist es auf praktisch einfache Weise möglich, den aus den Strahlen 84, 86, 88 bestehenden gemeinsamen Mischungsstrahl 90 mit ausreichend hohem Druck in den Kanal 16 einzuleiten.

Im Unterschied zu der Darstellung gemäß Fig. 3 tritt der aus den Strahlen 84, 86, 88 bestehende gemeinsame Mischungsstrahl 90 direkt in eine Verwirbelungskammer 12.1 ein, und zwar an - im Beispielsfall der Fig. 4 zwei - gegenüberliegenden Stellen dieser Kammer 12.1. Statt dieser zwei können auch mehrere Einleitungsstellen vorhanden sein. Die Mischungsstrahlen 90 können dabei unmittelbar durch die Einleitungskanäle 28, 30 oder indirekt durch zwischengeschaltete Kanalstücke 80, 82 direkt in die Verwirbelungskammer 12.1 mit der Auswölbung 14.1 einmünden.

Mit Hilfe der vorstehenden Vorrichtungen lassen sich auf sehr effektive Weise Metalle aus Gesteinen, Schlämmen oder dergleichen herauslösen. Falls gewünscht, läßt sich durch Zuführen von Wärme die Reaktionszeit weiter verkürzen. Dies kann beispielsweise durch Anwärmen von einzelnen oder allen der beteiligten Produkte erfolgen. Die mit diesen Vorrichtungen durchgeführten Verfahren erweisen sich damit nicht nur im Hinblick auf ihre Ausbeute als besonders wirkungsvoll; sie haben insbesondere auch den Vorteil, daß die zu ihrer Verwirklichung benötigten Apparaturen und Geräte im Vergleich mit den im Stand der Technik bekannten Gerätschaften sehr kostengünstig bereitzustellen sind.

## Patentansprüche

1. Verfahren zum Herauslösen von Metallen aus Gesteinen, Schlämmen, Flüssigkeitsablagerungen oder Aschen mittels eines Flüssigkeitsgemisches aus Wasser und Lösungsmittel, bei dem
a) das Metall enthaltende Gemenge in etwa mehlige Konsistenz gebracht wird,und
b) dieses mehlige Gemenge mit Wasser und gegebenenfalls einem Gleitmittel vermischt wird,
**dadurch gekennzeichnet,** daß
c) diese Mischung unter Druck gegen einen unter Hochdruck austretenden Strahl des Wasser und Lösungsmittel enthaltenden Flüssigkeitsgemisches derart gerichtet wird, daß die Mischung auf den Strahl trifft, so daß die Mischung vollständig mit diesem Gemisch-Strahl benetzt wird,
d) anschließend der Strahl und die Mischung innig miteinander verwirbelt werden und dann
e) die verwirbelten Produkte durch ein derartiges Sieb hindurchgeleitet werden, daß nur Flüssigkeit mit den in ihr gelöst vorhandenen Metallpartikeln durch das Sieb hindurchgelangen können.

2. Verfahren nach Anspruch 1,
**dadurch gekennzeichnet,** daß zwischen den Verfahrensschritten d) und e) die verwirbelten Produkte eine Zeitlang vermischt miteinander aufbereitet bleiben.

3. Verfahren nach Anspruch 2,
**dadurch gekennzeichnet,** daß die Produkte eine Zeitlang auf mechanische Weise miteinander vermischt werden.

4. Verfahren nach Anspruch 2 oder 3,
**dadurch gekennzeichnet,** daß während dieser Verweildauer dem Flüssigkeitsgemisch Luft und/oder Sauerstoff und/oder weiteres Lösungsmittel zugegeben wird.

5. Verfahren nach einem der Ansprüche 1 bis 4,
**dadurch gekennzeichnet,** daß das Metall enthaltende Gemenge zu mehliger Konsistenz gemahlen wird.

6. Verfahren nach einem der Ansprüche 1 bis 5,
**dadurch gekennzeichnet,** daß das Verfahren unter Wärmezufuhr stattfindet.

7. Verfahren nach Anspruch 6,
**dadurch gekennzeichnet,** daß die Wärme in Form von Wasserdampf zugegeben wird.

8. Verfahren nach einem der Ansprüche 1 bis 7,
**dadurch gekennzeichnet,** daß dem das Metall enthaltende Gemenge ein Lösungsmittel beigegeben wird, bevor das Gemenge unter Druck gegen den zumindest einen unter Hochdruck austretenden Wasser-Lösungsmittel-Strahl gerichtet wird.

9. Vorrichtung zum Durchführen des Verfahrens nach Anspruch 1,
**dadurch gekennzeichnet,** daß
- ein Gehäuse (10) mit einer Verwirbelungskammer (12) mit zumindest einer sackartigen Auswölbung (14, 14.1) vorhanden ist,
- zumindest ein Zuleitungskanal (16, 86, 88) in diese Kammer (12) einmündet, dessen Mündung der sackartigen Auswölbung (14, 14.1) gegenüberliegt,
- eine Ausflußöffnung (20) in der Verwirbelungskammer (12, 12.1) vorhanden ist, die in rechtem Winkel zum Zuleitungskanal (16, 86, 88), am anderen Ende der Kammer (12, 12.1), vorhanden ist,
- dem Zuleitungskanal (16, 86, 88) eine Hochdruckpumpe (26) zugeordnet ist, mit der das Flüssigkeitsgemisch aus Wasser und Lösungsmittel unter Hochdruck durch den Zuleitungskanal (16, 86, 88) in Form eines Strahls (46) hindurchdrückbar und in die Verwirbelungskammer (12, 12.1) einleitbar ist,
- zumindest ein weiterer Einleitungskanal (28, 30) vorhanden ist,
- diesem zumindest einen weiteren Kanal (28, 30) eine Hochdruckpumpe (36) zugeordnet ist, mit der das Metall enthaltende Gemisch unter Druck derart einleitbar ist, daß das Gemisch auf den Strahl (46) trifft,
- ein Sieb (42) zum Durchleiten der verwirbelten Produkte vorhanden ist, durch das nur Flüssigkeit mit den in ihr gelöst vorhandenen Metallpartikeln hindurchgelangen können.

10. Vorrichtung nach Anspruch 9,
**dadurch gekennzeichnet,** daß die Kanalmündung des zumindest einen Zuleitungskanals (16, 86, 88) düsenartig (32) ausgebildet ist.

11. Vorrichtung nach Anspruch 9,
**dadurch gekennzeichnet,** daß zumindest zwei sich mit ihrer Mündung diametral gegenüberliegende weitere Einleitungskanäle (28, 30) vorhanden sind, aus denen das Metall enthaltende Gemisch aufeinanderprallbar herausführbar ist.

12. Vorrichtung nach Anspruch 11,
**dadurch gekennzeichnet,** daß
- die beiden weiteren Einleitungskanäle (28, 30) im bzw. vor ihrem Mündungsbereich eine Krümmung (80, 82) aufweisen.

13. Vorrichtung nach einem der Ansprüche 9 bis 12,
**dadurch gekennzeichnet,** daß der zumindest eine weitere Kanal aus mehreren Kanalteilen derart besteht, daß nur aus einem ersten Kanalteil (28, 30) die Mischung mit dem mehligen Gemenge und aus dem zumindest einen zweiten Kanalteil (86, 88) eine Mischung ohne das mehlige Gemenge austritt, wobei die Mischungen aus den Kanalteilen sich vor oder bei Eintritt in die Verwirbelungskammer (12, 12.1) in einem einzigen Gemisch-Strahl (90) vereinigen.

14. Vorrichtung nach einem der Ansprüche 9 bis 13,
**dadurch gekennzeichnet,** daß
- eine Kammer (60) mit einer Einlaßöffnung (64) und einer Auslaßöffnung (66) vorhanden ist,
- die Einlaßöffnung (64) mit dem Auslaßkanal (20) des Gehäuses (10) und die Auslaßöffnung (66) mit einem Absetz- und Aufbereitungsbecken (40) verbunden ist,
- in der Kammer (60) ein Rührwerk (70) vorhanden ist, durch das das in der Kammer (60) befindliche Flüssigkeitsgemisch herumbewegbar ist.

15. Vorrichtung nach Anspruch 14,
**dadurch gekennzeichnet,** daß zumindest ein weiterer Einlaßkanal (75) zum Zuleiten der Luft und/oder des Sauerstoffes und/oder des weiteren Lösungsmittels und/oder von Wärme vorhanden ist.

16. Vorrichtung nach Anspruch 15,
**dadurch gekennzeichnet,** daß der weitere Einlaßkanal (75) mit vielen Verzweigungen in den Rührschaufeln (72) des Rührwerks (70) endet und durch in den Rührschaufeln (72) vorhandene Öffnungen (74) in die Kammer hineinmündet.

## Claims

1. Process for dissolving out metals from rocks, sludges, liquid sediments or ashes by means of a liquid mix of water and solvent, in which
a) the metal-containing conglomerate is brought to roughly the consistency of flour, and
b) this floury conglomerate is mixed with water and, if desired, a lubricant, characterized in that
c) this mixture is directed under pressure against a jet of the liquid mix, containing water and solvent, exiting under high pressure, in such a manner that the mixture meets the jet so that the mixture is completely wetted by this mixed jet,
d) the jet and the mixture are then intimately vortexed together and
e) the vortexed products are then passed through a screen of such a type that only liquid containing the metal particles present dissolved therein can pass through the screen.

2. Process according to Claim 1, characterized in that, between the process steps d) and e) the vortexed products remain dressed mixed together for a period.

3. Process according to Claim 2, characterized in that the products are mechanically mixed together for a period.

4. Process according to Claim 2 or 3, characterized in that during this residence period, air and/or oxygen and/or further solvent is added to the liquid mix.

5. Process according to one of Claims 1 to 4, characterized in that the metal-containing conglomerate is ground to a floury consistency.

6. Process according to one of Claims 1 to 5, characterized in that the process takes place with supply of heat.

7. Process according to Claim 6, characterized in that the heat is added in the form of steam.

8. Process according to one of Claims 1 to 7, characterized in that a solvent is added to the conglomerate containing the metal, before the conglomerate is directed under pressure against the at least one water/solvent jet exiting under high pressure.

9. Apparatus for carrying out the process according to Claim 1, characterized in that
- a casing (10) having a vortexing chamber (12) with at least one bag-like bulge (14, 14.1) is present,
- at least one feed duct (16, 86, 88) opens into this chamber (12), the mouth of which is opposite the bag-like bulge (14, 14.1),
- an outflow orifice (20) is present in the vortexing chamber (12, 12.1), which outflow orifice is present at a right angle to the feed duct (16, 86, 88), at the other end of the chamber (12, 12.1),
- a high-pressure pump (26) is assigned to the feed duct (16, 86, 88), by which high-pressure pump the liquid mix of water and solvent can be forced under high pressure through the feed duct (16, 86, 88) in the form of a jet (46) and can be introduced into the vortexing chamber (12, 12.1),
- at least one further introduction duct (28, 30) is present,
- a high-pressure pump (36) is assigned to this at least one further duct (28, 30), by which high-pressure pump the metal-containing mix can be introduced under pressure in such a manner that the mix meets the jet (46),
- a screen (42) for passing the vortexed products through is present, through which can pass only liquid containing the metal particles present dissolved therein.

10. Apparatus according to Claim 9, characterized in that the duct mouth of the at least one feed duct (16, 86, 88) is designed like a nozzle (32).

11. Apparatus according to Claim 9, characterized in that at least two further introduction ducts (28, 30) with their mouths diametrically opposite are present, from which the metal-containing mix can be conducted out to be able to collide together.

12. Apparatus according to Claim 11, characterized in that the two further introduction ducts (28, 30) have a bend (80, 82) in, or upstream of, the mouth region thereof.

13. Apparatus according to one of Claims 9 to 12, characterized in that the at least one further duct comprises a plurality of duct pieces in such a manner that the mixture containing the floury conglomerate exits only from a first duct piece (28, 30) and a mixture without the floury conglomerate exits from the at least one second duct piece (86, 88), the mixtures from the duct pieces combining into a single mixed jet (90) upstream of, or on entry into, the vortexing chamber (12, 12.1).

14. Apparatus according to one of Claims 9 to 13, characterized in that
- a chamber (60) having an inlet orifice (64) and an outlet orifice (66) is present,
- the inlet orifice (64) is connected to the outlet duct (20) of the casing (10) and the outlet orifice (66) is connected to a settling and treatment tank (40),
- an agitator (70) is present in the chamber (60), by which agitator the liquid mix situated in the chamber (60) can be moved around.

15. Apparatus according to Claim 14, characterized in that at least one further inlet duct (75) is present for feeding the air and/or the oxygen and/or the further solvent and/or heat.

16. Apparatus according to Claim 15, characterized in that the further inlet duct (75) ends with many branches in the agitator blades (72) of the agitator (70) and opens into the chamber through orifices (74) present in the agitator blades (72).

## Revendications

1. Procédé pour l'extraction de métaux par lixiviation de roches, de boues, de produits de décantation de liquides ou de cendres au moyen d'un mélange liquide contenant de l'eau et un agent de lixiviation, dans lequel :
a) le produit contenant du métal est amené à une consistance par exemple farineuse, et :
b) ce produit farineux est mélangé à de l'eau et, le cas échéant, à un agent de glissement,
caractérisé par le fait que :
c) ce mélange est dirigé sous pression sur un jet, sortant sous haute pression, du mélange liquide contenant de l'eau et un agent de lixiviation, et ce, d'une manière telle que le mélange rencontre le jet, de sorte que le mélange est mouillé complètement par ce jet mixte,
d) le jet et le mélange sont alors brassés ensemble intimement par tourbillonnement, et ensuite :
e) les produits ayant tourbillonné sont amenés à passer à travers un tamis tel que seuls le liquide et les particules métalliques qui y sont présentes à l'état dissous peuvent arriver à traverser le tamis.

2. Procédé selon la revendication 1, caractérisé par le fait qu'entre les étapes d) et e) du procédé, les produits ayant tourbillonné restent soumis un certain temps à une préparation en étant mélangés entre eux.

3. Procédé selon la revendication 2, caractérisé par le fait que les produits sont mélangés entre eux un certain temps par voie mécanique.

4. Procédé selon la revendication 2 ou 3, caractérisé par le fait que, pendant cette durée de séjour, on ajoute au mélange liquide de l'air et/ou de l'oxygène et/ou un autre agent de lixiviation.

5. Procédé selon l'une des revendications 1 à 4, caractérisé par le fait que le mélange contenant du métal est broyé jusqu'à une consistance farineuse.

6. Procédé selon l'une des revendications 1 à 5, caractérisé par le fait que le procédé est mis en oeuvre avec un apport de chaleur.

7. Procédé selon la revendication 6, caractérisé par le fait que la chaleur est fournie sous la forme de vapeur d'eau.

8. Procédé selon l'une des revendications 1 à 7, caractérisé par le fait que l'on ajoute un agent de lixiviation au mélange contenant le métal avant que le mélange ne soit dirigé sous pression sur le ou les jets d'eau et d'agent de lixiviation qui sortent sous haute pression.

9. Dispositif pour la mise en oeuvre du procédé selon la revendication 1, caractérisé par le fait que :
- il est prévu un carter (10) qui comprend une chambre de tourbillonnement (12) pourvue d'un renflement en forme de poche (14, 14.1),
- dans cette chambre (12) débouche au moins un canal d'amenée (16, 86, 88) dont l'embouchure est en face du renflement en forme de poche (14, 14.1),
- il est prévu dans la chambre de tourbillonnement (12, 12.1) une ouverture de sortie (20) qui se trouve à l'autre extrémité de la chambre (12, 12.1), à angle droit par rapport au canal d'amenée (16, 86, 88),
- au canal d'amenée (16, 86, 88) est associée une pompe à haute pression (26) au moyen de laquelle le mélange liquide d'eau et d'agent de lixiviation peut être forcé sous haute pression à travers le canal d'amenée (16, 86, 88) sous la forme d'un jet (46) et peut être introduit dans la chambre de tourbillonnement (12, 12.1),
- il est prévu au moins un autre canal d'introduction (28, 30),
- à cet autre canal ou à ces autres canaux (28, 30) est associée une pompe à haute pression (36) au moyen de laquelle le mélange contenant le métal peut être introduit sous pression d'une manière telle que le mélange rencontre le jet (46),
- il est prévu un tamis (42) destiné à être traversé par les produits ayant tourbillonné et à travers lequel seul peut passer du liquide contenant les particules métalliques renfermées dans celui-ci à l'état dissous.

10. Dispositif selon la revendication 9, caractérisé par le fait que l'embouchure du ou des canaux d'amenée (16, 86, 88) est réalisée en forme de buse (32).

11. Dispositif selon la revendication 9, caractérisé par le fait qu'il est prévu au moins deux autres canaux d'introduction (28, 30) qui sont diamétralement opposés par leurs embouchures et hors desquels le mélange contenant du métal peut être amené pour produire un choc mutuel.

12. Dispositif selon la revendication 11, caractérisé par le fait que les deux autres canaux d'introduction (28, 30) présentent une courbure (80, 82) dans la région de leur embouchure ou avant celle-ci, respectivement.

13. Dispositif selon l'une des revendications 9 à 12, caractérisé par le fait que le ou les autres canaux sont constitués par plusieurs parties de canaux d'une manière telle que le mélange contenant le produit farineux ne sorte que d'une première partie de canal (28, 30), et que le mélange ne contenant pas le produit farineux ne sorte que d'au moins une deuxième partie de canal (86, 88), les mélanges qui sortent des parties de canaux se réunissant en un jet mixte unique (90) avant l'entrée dans la chambre de tourbillonnement (12, 12.1) ou lors de celle-ci.

14. Dispositif selon l'une des revendications 9 à 13, caractérisé par le fait que :
- il est prévu une chambre (60) pourvue d'une ouverture d'entrée (64) et d'une ouverture de sortie (66),
- l'ouverture d'entrée (64) est reliée au canal de sortie (20) du carter (10) et l'ouverture de sortie (66) est reliée à un bassin de décantation et de préparation (40),
- il est prévu dans la chambre (60) un agitateur (70) au moyen duquel le mélange liquide qui se trouve dans la chambre (60) peut être agité circulairement.

15. Dispositif selon la revendication 14, caractérisé par le fait qu'il est prévu au moins un autre canal d'entrée (75) qui est destiné à amener l'air et/ou l'oxygène et/ou l'autre agent de lixiviation et/ou de la chaleur.

16. Dispositif selon la revendication 15, caractérisé par le fait que l'autre canal d'entrée (75) se termine dans les ailettes d'agitation (72) de l'agitateur (70) par de nombreuses ramifications, et qu'il débouche dans la chambre par des ouvertures (74) prévues dans les ailettes d'agitation (72).
